# EUROPEAN PATENT SPECIFICATION

(11) **EP 0 791 161 B1**
(45) Date of publication and mention of the grant of the patent: **23.02.2000**
(21) Application number: 95937262.4
(22) Date of filing: 26.10.1995
(51) Int. Cl.: F24D 19/00, F24D 19/08, B04C 9/00

(54) **A METHOD AND A DEVICE FOR REDUCING ANY BUILDUP OF CORROSION ACCUMULATIONS IN A CONDUIT CIRCUIT FOR A CONTINUOUS FLOW OF A SYSTEM LIQUID**
VERFAHREN UND VORRICHTUNG ZUR VERRINGERUNG DES ABLAGERNS VON KORROSIONSPRODUKTEN IN EINER LEITUNG FÜR KONTINUIERLICHE STRÖMUNG
PROCEDE ET APPAREILLAGE POUR EVITER L'ACCUMULATION DE PRODUITS DE CORROSION DANS UNE CONDUITE DESTINEE A UNE CIRCULATION PERMANENTE DE LIQUIDE

(30) Priority: 17.11.1994 SE 9403963
(43) Date of publication of application: 27.08.1997
(73) Proprietor: Carlsson, Björn, 392 43 Kalmar (SE)
(72) Inventor: Carlsson, Björn, 392 43 Kalmar (SE)
(74) Representative: Nydell, Peder
(86) International application number: SE9501271
(87) International publication number: WO9616299

(56) References cited:
- WO-A-92/02766
- AU-A- 5 056 679
- DE-A- 2 909 318
- SU-A- 629 951
- US-A- 4 723 970
- DERWENT'S ABSTRACT, No. 90-319077/42, Week 9042; & SU,A,1 551 398 (LETYUK A I), 23 March 1990.
- DERWENT'S ABSTRACT, No. 87-183973/26, Week 8726; & SU,A,1 269 810 (GRODNO AZOT PRODN), 2 January 1985.

## Description

### FIELD OF THE INVENTION

The present invention relates to a method for reducing any build-up of corrosion accumulations in a conduit circuit for a continuous flow of a system liquid in a heating or cooling system, wherein a diverted flow of the system liquid is diverted to a regeneration circuit which is connectable to the conduit circuit, and from which the diverted flow, after having been regenerated, is returned to the conduit circuit.

The invention also relates to a device for carrying out the method.

### BACKGROUND ART

Such a method is known from the patent document WO-A1-9202766, where a plurality of reconditioning steps are carried out on a diverted flow of a system liquid. The document notes the demand for removing corrosive gases from the system liquid, but it does not suggest any clear constructive solutions to the deaerating issue.

It is known that solid particles which are susceptible to a magnetic field, e. g. iron particles, which have gained entrance into such flowing liquids, either as a result of corrosion in the conduit, or in the form of hacksaw dust, dust from screw thread cutting or the like, may contribute to further corrosion accumulations in the conduit, particularly if the liquid has a high oxygen concentration or a high concentration of carbon dioxide in the form of carbonic acid. Such a corrosion is very disastrous since it may eventually lead to leakage of liquid. The corrosion issue is less present at high liquid temperatures, since the oxygen will then be driven off due to the high temperature. However, the corrosion problem is more dominant in today's increasing use of low energy systems which present high static pressures, where the low liquid temperature cannot drive off the oxygen or the carbon dioxide.

The Soviet patent specification SU 629.951 discloses a particle trap for magnetically susceptible particles, which is of the kind where the particles are separated from a flowing liquid by subjecting them, along a portion of the conduit, to a magnetic field which attracts the particles towards the wall of said portion of the conduit. However, it has turned out that such known particle traps are not always sufficiently efficient.

### SUMMARY OF THE INVENTION

The object of the present invention is, therefore, to provide a method and a device of the kind mentioned by way of introduction, which provides a more efficient deaerating of the system liquid and a more efficient trapping of magnetically susceptible particles in the liquid.

This object will be achieved by a method and a device according to the invention having the characteristics set forth in Claim 1 and 3, respectively.

The invention is based upon the surprising knowledge that the deaerating problem and the problem of trapping magnetically susceptible particles may be attacked in one and the same regeneration step, where the system liquid is first subjected to a reduction of pressure, and then subjected to a combination of centrifugal forces and turbulence.

The reduction of pressure will set free any gases in the liquid, while the centrifugal forces will cause a separation of particles and gases from the liquid. The turbulence will accomplish a reduction in velocity of the liquid flow while the centrifugal forces will tend to agglomerate the gases towards the center of the centrifugal turbulator, from where the gases can readily be removed by a conventional deaerator. The centrifugal forces will force the particles in the liquid towards the periphery of the turbulator, and they will substantially remain at the periphery of the flow thanks to the turbulence, also when the flow has reached the particle trap, so that the particles can efficiently be influenced by the magnetic field of the particle trap, which magnetic field is strongest adjacent the wall of the particle trap.

Further embodiments of the invention will be apparent from the dependent claims.

### BRIEF DESCRIPTION OF THE DRAWING

The invention will be described in more detail by reference to the accompanying drawing which illustrates a preferred embodiment of the invention.

Fig. 1 is a structural diagram of a device according to the invention.

Fig. 2 is a broken perspective view of a centrifugal turbulator incorporated into the invention.

### PREFERRED EMBODIMENT

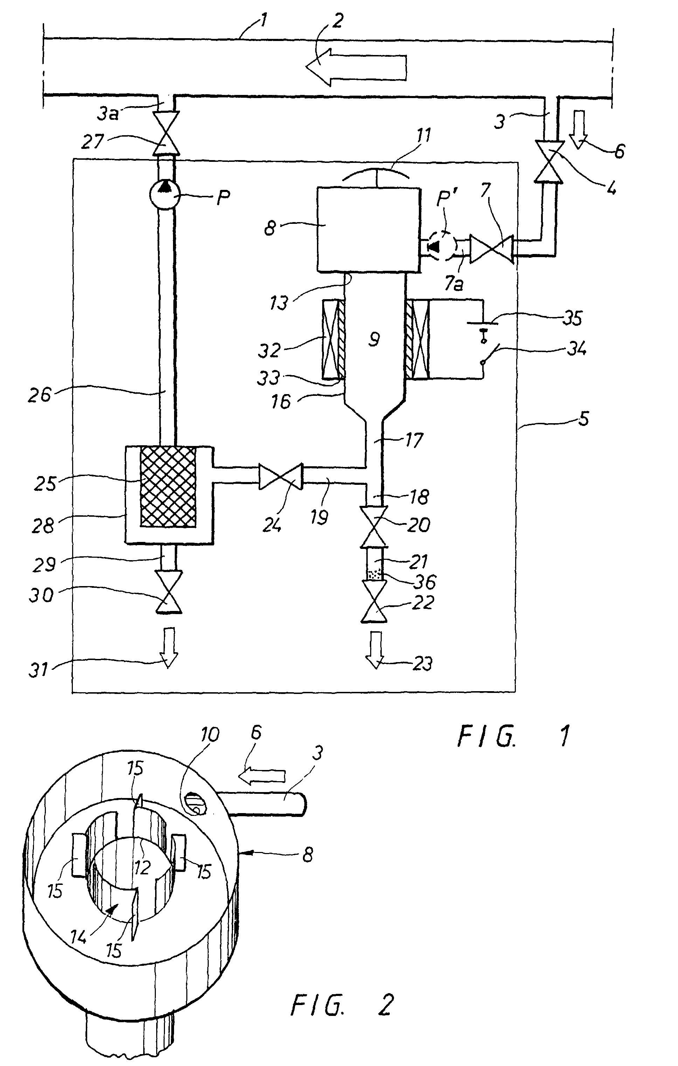

Fig. 1 shows a flow line 1 of a conduit circuit for a continuous flow of system liquid flowing in the direction of arrow 2 in a heating or cooling system, not shown, e. g. a heat carrying liquid in a heating system for a building.

The device according to the invention comprises a regeneration circuit 5, which is connectable to conduit 1 - via conduits 3 and via an inlet valve 4, e. g. a manually operated close valve - in order to receive a diverted flow, symbolized by arrow 6, from conduit 1, and in order to regenerate diverted flow 6 by deaerating and by removing magnetically susceptible particles, and to then return the regenerated diverted flow to conduit circuit 1.

Regeneration circuit 5 consists of a series coupling of (a) a throttling means (throttling valve) 7, which reduces the flowing-through volume and which strongly reduces the flow pressure so that gases in the liquid will be set free, (b) a so called centrifugal turbulator 8 for subjecting flow 6 to centrifugal forces and also to turbulence, the centrifugal forces separating any released gas and any particles from the liquid, the turbulence accomplishing a reduction in flow velocity of flow 6, and (c) a particle trap 9 for trapping magnetically susceptible particles in flow 6.

Turbulator 8 consists of a cylindrical container, see Fig. 2, having a peripheral inlet opening 10 at the bottom jacket surface in order to tangentially receive diverted flow 6 from conduit 3. The diameter of container 8 is significantly greater, e. g. about 6 - 8 times greater than the diameter of conduit 3. The top of container 8 is provided with a conventional deaerator 11, see Fig. 1.

The bottom end portion of container 8 has a central coaxially arranged outlet opening 12, see Fig. 2, located in close relationship with an inlet opening 13 of particle trap 9.

Coaxially mounted within container 8 around outlet opening 12 is a cylnder means 14, in the wall of which four circumferentially equally spaced rectangular wall parts are cut out, having the same length as cylinder 14, to form four, at substantially right angles protruding turbulence creating wings 15.

Diverted flow 6 will, accordingly, upon entrance into container 8, be subjected to centrifugal forces, since the diverted flow enters tangentially into container 8, and to turbulence due to the flow obstructions formed by wings 15.

Particle trap 9 consists of a vertically orientated elongated cylindrical tube 16 made by a non-magnetic material, e. g. copper, and having a greater cross sectional dimension than conduit 3 in order to obtain a reduced flow velocity.

Tube 16 ends at its bottom into a conduit 17. This is branched off into a discharge conduit 18 and into a conduit 19.

Discharge conduit 18 is via a valve 20 connected to a discharge space 21 which can be discharged via a discharge means in the form of a valve 22, as is shown by arrow 23 in Fig. 1. Conduit 19 is via a second close valve 24 connected to a mechanic filter 25, known per se, being of net or cloth type for trapping and removing larger particles. Filter 25 is, in a known way, adapted to be removed and cleaned or replaced with a new filter at even intervals. The outlet of filter 25 is via a conduit 26 and a valve 27 connected to conduit circuit 1 via outlet end 3a of conduits 3 in order to return the regenerated liquid to conduit circuit 1.

A flow generating means P, e.g. a pump device, is arranged in conduit circuit 26 for sustaining a sufficient liquid flow in regeneration circuit 5 and for increasing the pressure of the liquid to a level equal to the pressure of the system liquid flowing in conduit circuit 1 before the regenerated liquid is returned to conduit circuit 1.

Filter 25 is housed within a container 28, the bottom part of which has a discharge tube 29 which can be discharged via a discharge means in the form of a valve 30, as is shown by arrow 31.

A source of magnetic field, i.e. an electromagnet 32 in the example shown, is concentrically disposed around the periphery of tube 16 with an intermediate iron cylinder 33. Magnet 32 is via a switch 34 connected to a DC source 35.

The function of the device is as follows.

Valves 4, 24 and 27 are, in normal operation, open while electromagnet 32 is activated during a predetermined time interval, i.e. one week. A certain amount of liquid will, accordingly, be diverted during this time interval from conduit circuit 1 through throttling means 7, centrifugal turbulator 8 and particle trap 9. Any gas present in the liquid will thereby be deaerated by deaerator 11 while any magnetically susceptible particles that may be present in the liquid will be attracted by said magnetic field, generated by magnet 32, towards the inner wall of tube 16 and get stuck to the wall.

The efficiency of particle trap 9 and deaerator 11 will be significantly enhanced thanks to the combined function of throttling means 7 and centrifugal turbulator 8, which will accomplish that diverted flow 6 will, in a first regeneration step, be subjected to a pressure reduction in throttling means 7, and to centrifugal forces and turbulence in turbulator 8, resulting in that released gas will be agglomerated at the center of the turbulator where the gas can easily be removed by deaerator 11, and also resulting in that particles in the liquid will be forced out towards the periphery of the turbulator and, due to turbulence, will remain at the periphery of the diverted flow even when the flow has reached the particle trap, so that flow 6 will, in a second regeneration step, be very efficiently cleaned from magnetically susceptible particles in particle trap 9, as has been described above.

At the end of said predetermined time interval, valves 4 and 24 will close, so that the liquid flow through tube 16 will cease. Then switch 34 is opened so that the magnetic field around tube 16 will cease. This will cause the particles that are stuck to the inner wall of tube 16 to come loose and fall, by their own weight, downwards in tube 16 until they end up in discharge conduit 18. This discharge of the particles into conduit 18 will of course be facilitated if tube 16 is somewhat inclined relative to the horizontal, e. g. if it is vertically orientated according to the embodiment illustrated. If valve 20 is then opened they will fall, together with a minor amount of liquid, further downwards into discharge space 21, where they will gather on the bottom thereof, as is depicted by reference numeral 36. Valve 20 is therafter closed, whereupon the contents of space 21, i.e. a small amount of liquid and the particles 36, can be discharged in the direction of arrow 23. Valves 4 and 24 and switch 34 can now again open to start a new particle trap cycle.

According to an alternative embodiment of the invention discharge conduit 18 and its discharge space 21 can be omitted. In this case a discharge of the loosened particles can instead occur through the discharge tube 29 of container 28 and corresponding valve 30. In this alternative embodiment valves 4 and 27 are closed during discharge, whereas valve 24 is open. According to this embodiment the entire liquid amount in tube 16, container 28 and associated pipes will be discharged, e.g. a significantly greater amount of liquid will be discharged from the system as compared with the first described embodiment.

The embodiment described above is based upon the asumption that the system liquid in conduit circuit 1 is pressurized to a high pressure, e.g. on the order of 2 - 5 atmosphere gauge, thereby requiring the flowing system liquid to flow in a closed system. If, however, the system liquid should not be pressurized, but instead flow under atmospheric pressure, for instance, in a system being open with respect to the ambient atmosphere, the liquid pressure prevailing behind throttling means 7 would not be high enough to permit any deaerating in deaerator 11. In order to solve this problem, pump device P has been moved from its location in conduit 26 to an alternative location in conduit 7a between throttling means 7 and turbulator 8, as is shown in dashed line at P' in Fig. 1. The pressure side of the pump device is, thereby, communicating with turbulator 8, whereas its suction side communicates with the output of throttling means 7.

Pump device P' has, in this alternative embodiment, the following function.

When the system liquid has passed throttling means 7 and has been given a negative pressure (vacuum) due to the suction ability of pump P', any oxygen and other gases, which are dissolved into the liquid, will, due to the negative pressure, be released in the form of bubbles, which will be conveyed by the liquid flow through pump P' and into turbulator 8, where the gases are withdrawn by deaerator 11 as has been described above. At the pump wings, or the like, there will partially be a further pressure reduction (cavitation) which will enhance the deaerating effect. Empirical tests have shown that the pressure increase of the liquid that will occur at the pressure side of pump P' will not bring about any dissolving of the gases in the liquid before the gases are removed by deaerator 11.

Pump P' has, for the rest, the same object as pump P, i.e. to sustain sufficient pressure in the diverted flow in regeneration circuit 5 and to increase the pressure of the diverted flow to a level equal to the pressure of the system liquid in conduit circuit 1.

## Claims

1. A method for reducing any build-up of corrosion accumulations in a conduit circuit (1) for a continuous flow of a system liquid in a heating or cooling system, wherein a diverted flow (6) of the system liquid is diverted to a regeneration circuit (5) which is connectable to the conduit circuit, and from which the diverted flow, after having been regenerated, is returned to the conduit circuit.
**characterized** in that the diverted flow (6) is subjected, in a first regeneration step, to (a) a pressure reduction which releases gas in the liquid, and (b) to centrifugal forces which separate any particles and gas from the liquid, and (c) to a turbulence which will accomplish a reduction in velocity of the diverted flow; and that the diverted flow, in a second regeneration step, is passed, while maintaining influence from said turbulence and said centrifugal forces, through a particle trap (9), of the kind known per se, where magnetically susceptible particles are adhesively attracted to the wall of the particle trap by means of a magnetic field.

2. Method according to Claim 1, **characterized** in that said gases being separated in said first regeneration step are passed to a deaerator (11) for deaerating.

3. Device for reduction of any build-up of corrosion accumulations in a conduit circuit (1) for a continuous flow of system liquid in a heating or cooling system, comprising a regeneration circuit (5) which is connectable to the conduit circuit (1) in order to receive a diverted flow (6) from the conduit circuit and to regenerate the diverted flow by deaerating and removal of magnetically susceptible particles, and to then return the regenerated diverted flow to the conduit circuit,
**characterized** in that the regeneration circuit comprises a series coupling of (a) a throttling means (7) in order to accomplish a pressure reduction of the diverted flow (6), (b) a centrifugal turbulator (8) for subjecting the diverted flow (6) to centrifugal forces which separate any particles and gases from the diverted flow, and to turbulence which accomplishes a reduction in velocity of the diverted flow, and (c) a particle trap (9) for trapping any magnetically susceptible particles in the diverted flow.

4. Device according to Claim 3, **characterized** in that the centrifugal turbulator (8) is provided with a deaerator (11) for deaerating said gases.

5. Device according to Claim 4, **characterized** in that the regeneration circuit (5) contains a flow generating means (P; P'), e.g. a pump device, for sustaining a sufficient pressure in said diverted flow and to increase the pressure of the diverted flow to a level at least equal to the pressure of the system liquid flowing in the conduit circuit (1).

6. Device according to Claim 5, **characterized** in that the pump device (P') is connected between the throttling means (7) and the centrifugal turbulator (8), the pump device having a suction side communicating with the throttling means, and a pressure side communicating with the centrifugal turbulator.

7. Device according to any of Claims 3 - 6, **characterized** in that the centrifugal turbulator (8) consists of a cylindrical container into which the diverted flow (6) is drawn in order to be subjected to said centrifugal forces, and which has turbulence creating means, e.g. flow hindering wings (15) in the flow path of the diverted flow.

8. Device according to Claim 7, **characterized** in that one end of the cylindrical container (8) has an outlet (12) communicating with the particle trap (9)

## Patentansprüche

1. Verfahren zur Verringerung jeglichen Aufbaus von Korrosionsablagerungen in einem Leitungskreislauf (1) für kontinuierliche Strömung einer System-Flüssigkeit in einem Heiz- oder Kühlsystem, in welchem eine umgeleitete Strömung (6) der System-Flüssigkeit in einen Regenerierungskreislauf (5) umgeleitet wird, welcher an den Leitungskreislauf anschließbar ist, und von welchem die umgeleitete Strömung, nachdem sie regeneriert worden ist, zum Leitungskreislauf zurückgeführt wird, dadurch gekennzeichnet, daß die umgeleitete Strömung (6) in einem ersten Regenerierungsschritt einer (a) Druckerniedrigung, welche Gas aus der Flüssigkeit freisetzt und (b) Zentrifugalkräften, welche jegliche Partikel und Gas von der Flüssigkeit trennen und (c) einer Wirbelströmung ausgesetzt wird, welche einer Reduzierung der Geschwindigkeit der umgeleiteten Strömung bewirken wird; und daß die umgeleitete Strömung in einem zweiten Regenerierungsschritt, während der Einfluß der Wirbelströmung und der Zentrifugalkräfte aufrechterhalten wird, durch einen Partikel-Abscheider (9) einer per se bekannten Art geführt wird, wobei magnetisch suszeptible Partikel mittels eines Magnetfeldes an die Wand des Partikel-Abscheiders angezogen werden.

2. Verfahren gemäß Anspruch 1, dadurch gekennzeichnet, daß die im ersten Regenerierungsschritt getrennten Gase zur Entlüftung durch eine Entlüftungseinrichtung (11) geführt werden.

3. Vorrichtung zur Reduzierung jeglichen Aufbaus von Korrosionsablagerungen in einem Leitungskreislauf (1) für kontinuierliche Strömung einer System-Flüssigkeit in einem Heiz- oder Kühlsystem, welche einen Regenerierungskreislauf (5) umfaßt, welcher an den Leitungskreislauf (1) anschließbar ist, um eine umgeleitete Strömung (6) von dem Leitungskreislauf zu erhalten, und um die umgeleitete Strömung durch Entlüften und Entfernung magnetisch suszeptibler Partikel zu regenerieren und dann die umgeleitete regenerierte Strömung zum Leitungskreislauf zurückzuführen, dadurch gekennzeichnet, daß der Regenerierungskreislauf eine Reihen-Kopplung von (a) einer Drosseleinrichtung (7), um eine Druckerniedrigung der umgeleiteten Strömung (6) zu bewirken, (b) einen Zentrifugal-Turbulator (8), um die umgeleitete Strömung (6) Zentrifugalkräften auszusetzen, welche jegliche Partikel und Gase von der umgeleiteten Strömung trennt, und um eine Wirbelströmung vorzusehen, was eine Reduzierung der Geschwindigkeit der umgeleiteten Strömung bewirkt und (c) einen Partikel-Abscheider (9) zum Abscheiden jeglicher magnetisch suszeptibler Partikel in der umgeleiteten Strömung, aufweist.

4. Vorrichtung gemäß Anspruch 3, dadurch gekennzeichnet, daß der Zentrifugal-Turbulator (8) mit einer Entlüfungseinrichtung (11) zum Entlüften der Gase versehen ist.

5. Vorrichtung gemäß Anspruch 4, dadurch gekennzeichnet, daß der Regenerierungskreislauf (5) eine Strömungserzeugungs-Einrichtung (P; P'), z. B. eine Pump-Vorrichtung aufweist zum Erhalten eines ausreichenden Drucks in der umgeleiteten Strömung, und um den Druck der umgeleiteten Strömung auf ein Niveau mindestens gleich dem Druck der System-Flüssigkeit zu erhöhen, welche durch den Leitungskreislauf (1) fließt.

6. Vorrichtung gemäß Anspruch 5, dadurch gekennzeichnet, daß die Pump-Vorrichtung (P') zwischen der Drosseleinrichtung (7) und dem Zentrifugal-Turbulator (8) angeschlossen ist, wobei die Pump-Vorrichtung eine Saugseite, welche mit der Drosseleinrichtung kommuniziert und eine Druckseite aufweist, welche mit dem Zentrifugal-Turbulator kommuniziert.

7. Vorrichtung gemäß einem der Ansprüche 3 bis 6, dadurch gekennzeichnet, daß der Zentrifugal-Turbulator (8) aus einem zylindrischen Behälter besteht, in welchen die umgeleitete Strömung (6) abgezogen wird, um den Zentrifugalkräften ausgesetzt zu werden, und welcher eine Wirbelströmungserzeugungs-Einrichtung, z. B. Strömungsaufhalte-Flügel (15) im Strömungsweg der umgeleiteten Strömung aufweist.

8. Vorrichtung gemäß Anspruch 7, dadurch gekennzeichnet, daß ein Ende des zylindrischen Behälters (8) einen Auslaß (12) aufweist, welcher mit dem Partikel-Abscheider (9) kommuniziert.

## Revendications

1. Procédé de réduction de toute formation d'accumulations de corrosion dans un circuit de conduit (1) pour écoulement continu d'un liquide de système dans un système de chauffage ou de réfrigération, dans lequel un débit détourné (6) du liquide de système est dérivé vers un circuit de régénération (5) pouvant être relié au circuit de conduit et d'où le débit dérivé, après avoir été régénéré, est renvoyé au circuit de conduit ;
caractérisé en ce que
dans une première étape de régénération, le débit dérivé (6) est soumis à (a) une réduction de pression qui libère le gaz contenu dans le liquide, (b) des forces centrifuges qui séparent les particules éventuelles et le gaz du liquide, et (c) une turbulence qui doit produire une réduction de la vitesse du débit dérivé ; et
dans une seconde étape de régénération, on fait passer le débit dérivé, tout en maintenant l'influence de la turbulence et des forces centrifuges, à travers un piège à particules (9) de type connu en soi, dans lequel des particules magnétiquement sensibles sont attirées de manière à adhérer à la paroi du piège à particules sous l'effet d'un champ magnétique.

2. Procédé selon la revendication 1,
caractérisé en ce qu'
on fait passer à travers un dégazeur (11) les gaz ayant été séparés dans la première étape de régénération, pour produire le dégazage.

3. Dispositif de réduction de toute formation d'accumulations de corrosion dans un circuit de conduit (1) pour écoulement continu d'un liquide de système dans un système de chauffage ou de réfrigération, comprenant un circuit de régénération (5) pouvant être relié au circuit de conduit (1) pour recevoir un débit dérivé (6) provenant du circuit de conduit, et pour régénérer le débit dérivé par dégazage et extraction des particules magnétiquement sensibles, puis en renvoyant ensuite le débit dérivé régénéré vers le circuit de conduit,
caractérisé en ce que
le circuit de régénération comprend le couplage en série de (a) un moyen d'étranglement (7) destiné à produire une réduction de pression du débit dérivé (6), (b) un agitateur centrifuge (8) destiné à soumettre le débit dérivé (6) à des forces centrifuges séparant les particules éventuelles et les gaz du débit dérivé, et à générer une turbulence produisant une réduction de la vitesse du débit dérivé, et (c) un piège à particules (9) destiné à piéger toutes particules magnétiquement sensibles dans le débit dérivé.

4. Dispositif selon la revendication 3,
caractérisé en ce que
l'agitateur centrifuge (8) est muni d'un dégazeur (11) pour dégazer les gaz.

5. Dispositif selon la revendication 4,
caractérisé en ce que
le circuit de régénération (5) contient un moyen de génération de débit (P, P'), tel que par exemple un dispositif de pompe, pour maintenir une pression suffisante dans le débit dérivé et pour augmenter la pression du débit dérivé jusqu'à un niveau au moins égal à la pression du liquide de système s'écoulant dans le circuit de conduit (1).

6. Dispositif selon la revendication 5,
caractérisé en ce que
le dispositif de pompe (P') est monté entre le moyen d'étranglement (7) et l'agitateur centrifuge (8), ce dispositif de pompe comportant un côté d'aspiration communiquant avec le moyen d'étranglement, et un côté sous pression communiquant avec l'agitateur centrifuge.

7. Dispositif selon l'une quelconque des revendications 3 à 6,
caractérisé en ce que
l'agitateur centrifuge (8) consiste en un récipient cylindrique dans lequel le débit dérivé (6) est aspiré de manière à être soumis aux forces centrifuges, et qui comporte des moyens de création de turbulence, tels que par exemple des ailettes (15) faisant obstacle au débit dans le chemin d'écoulement du débit dérivé.

8. Dispositif selon la revendication 7,
caractérisé en ce qu'
une extrémité du récipient cylindrique (8) comporte une sortie (12) communiquant avec le piège à particules (9).
